(19) Europäisches Patentamt / European Patent Office / Office européen des brevets

(11) **EP 4 442 174 A1**

(12) **EUROPEAN PATENT APPLICATION**
published in accordance with Art. 153(4) EPC

(43) Date of publication:
**09.10.2024 Bulletin 2024/41**

(21) Application number: **22901535.9**

(22) Date of filing: **27.09.2022**

(51) International Patent Classification (IPC):
*A47J 31/06* (2006.01)     *A47J 31/56* (2006.01)
*A47J 31/44* (2006.01)     *A47J 31/42* (2006.01)
*H05B 6/06* (2006.01)     *H05B 6/12* (2006.01)

(52) Cooperative Patent Classification (CPC):
**A47J 31/06; A47J 31/42; A47J 31/44; A47J 31/56; H05B 6/06; H05B 6/12**

(86) International application number:
**PCT/KR2022/014437**

(87) International publication number:
**WO 2023/101175 (08.06.2023 Gazette 2023/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.12.2021 KR 20210171550**

(71) Applicant: **LG Electronics Inc.**
**Yeongdeungpo-gu**
**Seoul 07336 (KR)**

(72) Inventors:
• **NAM, Hyeunsik**
  **Seoul 08592 (KR)**
• **YANG, Jungkeun**
  **Seoul 08592 (KR)**
• **CHOI, Seung-Yeon**
  **Seoul 08592 (KR)**

(74) Representative: **Vossius & Partner**
**Patentanwälte Rechtsanwälte mbB**
**Siebertstrasse 3**
**81675 München (DE)**

(54) **COFFEE MACHINE**

(57)     The present invention relates to a coffee machine. The coffee machine according to an embodiment of the present invention comprises: a case; a water tank coupled to the case; a water discharge part for supplying water stored in the water tank; and a dripper for extracting liquid coffee, herein a heating plate is inserted into the water tank so that the water stored in the water tank can be heated through induction heating, and provides a structure that facilitates cleaning of the water tank and the heating plate.

[FIG. 4]

## Description

**CROSS-REFERENCE TO RELATED APPLICATION**

This application claims priority to and the benefit of Korean Patent Application No. 10-2021-0171550, filed on 2021.12.03, the disclosure of which is incorporated herein by reference in its entirety.

## BACKGROUND

**[Technical Field]**

Embodiments of the present invention relate to a coffee machine, and more specifically, the embodiments of the present invention relate to a coffee machine that has a detachable water tank structure, and inserts a heating plate heated by induction heating into the inside of a water tank, so that the water tank and heating plate can be easily separated and cleaned, and parts can be easily replaced.

**[Background Art]**

The following description is only for the purpose of providing background information related to embodiments of the present disclosure, and the contents to be described do not necessarily constitute related art.

Recently, many users are making and drinking coffee at home in various ways. In this way, an apparatus that allows a user to prepare and drink coffee is called a coffee machine or coffee maker.

A drip coffee machine refers to an apparatus that extracts coffee using a drip coffee method.

The drip coffee method refers to a method of grinding coffee beans, pouring heated water over them, filtering out coffee powder, and extracting only liquid coffee.

The drip coffee method is commonly used not only in coffee shops but also in general households recently because it can best express the unique taste and aroma of coffee depending on the coffee production location or the degree of roasting of the coffee beans.

The most representative drip coffee methods are briefly explained as follows. First, the user inserts a paper filter into the dripper, and then place the dripper on a server and pour the ground coffee powder into the dripper. Next, heated water is poured and supplied to the coffee powder contained in the dripper using a hand drip motion determined by the user. Afterwards, the heated water passes through the ground coffee beans contained in the dripper to extract liquid coffee, and the liquid coffee passes through the filter and is finally placed on the server located at the bottom of the dripper.

The acidity or concentration of coffee extracted using the drip coffee method may vary depending on the way the user pours water into the coffee powder contained in the dripper, the amount of water supplied, and the time the coffee is extracted.

Recently, technology is being introduced for a coffee machine that grinds coffee beans, supplies the ground coffee powder to a dripper, and sprays water on the coffee powder contained in the dripper to extract coffee using a typical hand drip method.

However, conventional drip coffee machines have an integrated water tank, making it difficult to clean a water tank. In addition, even when a detachable water tank is applied to conventional drip coffee machines, most of them had a built-in heater to boil water, making it difficult to clean scale and contamination inside the heater.

As a prior literature related to the present invention, US Registered Patent US4779520 (hereinafter referred to as Prior Literature 1) discloses a coffee maker or tea maker.

In the coffee maker disclosed in Prior Literature 1, a water tank/water container is integrated with a coffee maker body, making it difficult to clean when contaminated.

In addition, even when a detachable water tank/water container is applied, rather than heating the water tank separately, a heater installed inside a body heats the water. Thus, it is difficult to clean scale and contamination from the heater's internal flow path.

Since the heater is installed inside the body, it was inconvenient to disassemble the entire coffee maker to replace the heavily contaminated heater during long-term use.

As another prior literature related to the present invention, Republic of Korea Patent Publication No. 10-2115187 (hereinafter referred to as Prior Literature 2) discloses an induction heating module and a water purifier equipped with the same.

The water purifier disclosed in Prior Literature 2 includes a working coil, a hot water tank that is inductively heated by the working coil, and a spacer that maintains a constant distance between the working coil and the hot water tank.

However, in the case of Prior Literature 2, there is a disadvantage that it is not easy to separate and clean the water tank and the heating module. In other words, even if scales and contamination occur inside the heating module when used for a long period of time, since the heating module is installed inside the body, there is a problem that the entire water purifier must be disassembled to replace or clean the heating module.

**[DISCLOSURE]**

**[Technical Problem]**

An object of the present invention is to provide a coffee machine that can heat water in a water tank using an induction heating method by applying a detachable water tank and inserting an induction heating plate into a water tank, and allows for separation between the water tank and the induction heating plate inside the water tank, making it easy to clean the water tank and induction heating plate.

Another object of the present invention is to provide a coffee machine that can maintain a uniform temperature of water discharged by applying a method of heating the water stored in the water tank as a whole.

Another object of the present invention is to provide a coffee machine that can visually identify a state of contamination inside a water tank.

The objects of the present invention are not limited to the objects mentioned above, and other objects and advantages of the present invention that are not mentioned can be understood through the following description, and can be understood more clearly by the embodiments of the present invention. In addition, it will be readily apparent that the objects and advantages of the present invention can be realized by the means and combinations thereof indicated in the claims.

**[Technical Solution]**

A coffee machine according to an embodiment of the present invention includes a case, a water tank that is coupled to the case and stores water, a water outlet unit that supplies the water stored in the water tank, and a dripper that extracts liquid coffee by mixing the water supplied from the water outlet unit with coffee powder. The water tank is detachably coupled to the case, and includes at least one heating plate for induction heating inside the water tank, and the case includes an induction heating device that is disposed to face the heating plate, and heats the heating plate.

The induction heating device may be disposed to face the heating plate when the water tank is coupled to the case.

The heating plate may be located at a lower portion of the water tank.

In addition, the heating plate may have a shape and area corresponding to a bottom surface of the water tank.

In addition, the heating plate is inserted into the lower portion of the water tank so as to be parallel to the bottom surface of the water tank, and when the heating plate is inserted, a predetermined gap portion may be formed between the bottom surface of the water tank and the heating plate.

In addition, at least one step portion having a height corresponding to the gap portion is formed at the lower portion of the water tank, and when the heating plate is inserted, the heating plate is seated on the step portion so that the gap portion may be maintained between the bottom surface of the water tank and the lower surface of the heating plate.

In addition, at least one protrusion having a height corresponding to the gap portion is formed on the lower portion of the heating plate, and when the heating plate is inserted, the protrusion is seated on the bottom surface of the water tank and the gap portion is maintained between the bottom surface of the water tank and the lower surface of the heating plate.

In addition, the heating plate is inserted into the lower portion of the water tank so as to be parallel to the bottom surface of the water tank, and the heating plate may have at least one steam vent formed through a thickness direction.

In addition, a plurality of steam vents may be provided, and each of the plurality of steam vents may be disposed at equal intervals on the surface of the heating plate.

In addition, the steam vent may be disposed to have a predetermined size at the center of the surface of the heating plate.

In addition, the heating plate may be inserted into the lower portion of the water tank so as to be parallel to the bottom surface of the water tank, and may be provided with an embossing portion provided on at least one of the upper and lower surfaces of the heating plate to increase the surface area of the heating plate.

In addition, the water tank includes a water tank body that is open at the top and has a receiving space for storing water therein, and a water tank cover that is coupled to the water tank body to open and close the upper portion of the water tank body.

In addition, the water tank further includes a water tank discharge pipe that is provided on one side of the water tank body and discharges the water stored in the water tank body to an outside. The inlet of the water tank discharge pipe is located on the bottom surface of the water tank body, and the outlet of the water tank discharge pipe may be formed to extend outward from the upper portion of the water tank body.

In addition, a fastening protrusion is provided at a lower center of the water tank and protrudes upward at a predetermined height. The heating plate includes a fastening hole that is provided at a center of a surface corresponding to a position of the fastening protrusion, and an insertion member made of elastic material that penetrates the fastening hole and is coupled to the heating plate, and is provided with a fastening groove along an inner center. The fastening protrusion is inserted and fixed into the fastening groove of the insertion member.

In addition, a plurality of fastening protrusions protruding upward at a predetermined height are provided at each lower edge portion of the water tank body. The heating plate includes a plurality of fastening holes each provided corresponding to a position of each of the plurality of fastening protrusions, and a plurality of insertion members made of elastic material that penetrate the plurality of fastening holes and are coupled to the heating plate, and are provided with a fastening groove along an inner center. Each of the plurality of fastening protrusions is inserted and fixed into the fastening groove of the plurality of insertion members.

In addition, a step portion with an expanded diameter is provided at a lower end of each of the plurality of insertion members, and when the heating plate inserted, the step portion may form a predetermined gap portion between the bottom surface of the water tank and the heating plate.

In addition, the case may be equipped with a non-contact temperature sensor that is located facing one side of the water tank when the water tank is coupled and measures a surface temperature of the water tank.

In addition, the case may be equipped with a non-contact water level sensor that is located opposite one side of the water tank when the water tank is coupled and measures a level of the water stored in the water tank.

In addition, the induction heating device includes an induction heating case that is disposed to face a lower portion of the water tank.

The induction heating device further includes an induction heating coil that is disposed at a lower portion of the induction heating case, a coil base that accommodates and supports the induction heating coil, a ferrite that is located at a lower portion of the coil base, and a shield plate that is located at a lower portion of the ferrite and coupled with the induction heating case. The induction heating device further includes a temperature sensor that penetrates a center of the induction heating device and is exposed upward from a center of the induction heating case, and detects a temperature of the water tank.

A coffee machine according to an embodiment of the present invention includes a case, a water tank that is located at a rear top of the case and stores water, a hopper that is located at a front top of the case and stores a coffee bean, a grinder that is located at a lower portion of the hopper and grinds the coffee bean supplied from the hopper, a dripper that is located at a lower portion of the grinder, receives coffee powder ground by the grinder and extracts liquid coffee, a water outlet unit that includes a water outlet dropping the water into an inside of the dripper, and a driving unit that changes a position of the water outlet within an upper drip area of the dripper. The water tank is detachably coupled to the case, at least one heating plate for induction heating is inserted inside the water tank, and the case is provided with an induction heating device that is disposed to face the heating plate, and heats the heating plate.

**[Advantageous Effect]**

According to an embodiment of the present invention, the detachable water tank is applied to a coffee machine and the induction heating plate is inserted in the water tank, so the water in the water tank can be heated using the induction heating method. The water tank and induction heating plate inside the water tank can be separated, making it easy to clean the water tank and induction heating plate, and the induction heating plate can be easily replaced.

In addition, according to an embodiment of the present invention, by adopting a structure in which the induction heating plate is inserted into the inside of the detachable water tank, the water stored in the water tank can be heated as a whole using the induction heating method, and there is advantage in that the outlet water temperature can be maintained uniformly.

In addition, according to the embodiment of the present invention, the internal contamination state of the water tank can be confirmed with the naked eye, so the internal state of the water tank and state of the induction heating plate can be checked at any time, and there is an advantage in that cleaning and replacement of parts are easy.

In addition to the above-described effects, specific effects of the present invention are described below while explaining specific details for carrying out the invention.

**[Description of Drawings]**

FIG. 1 is a perspective view of a coffee machine according to an embodiment of the present invention.
FIG. 2 is a front view of a coffee machine according to an embodiment of the present invention.
FIG. 3 is a schematic cross-sectional view of a coffee machine according to an embodiment of the present invention.
FIG. 4 is a diagram of the main parts of a coffee machine according to an embodiment of the present invention.
FIG. 5 is an enlarged perspective view of a water tank and induction heating device of a coffee machine according to an embodiment of the present invention.
FIG. 6 is an enlarged exploded perspective view showing a water tank and induction heating device of a coffee machine according to an embodiment of the present invention.
FIG. 7 is a cross-sectional view showing a structure before a water tank, heating plate, and induction heating device are coupled with a case, in a coffee machine according to an embodiment of the present invention.
FIG. 8 is a cross-sectional view showing a structure after a water tank, heating plate, and induction heating device are coupled with a case in a coffee machine according to an embodiment of the present invention.
FIG. 9 is an exploded perspective view of a structure in which a heating plate is separated from a water tank of a coffee machine according to an embodiment of the present invention.
FIG. 10 is a cross-sectional view showing a structure in which a heating plate is inserted into a water tank of a coffee machine according to an embodiment of the present invention.
FIG. 11 is an enlarged cross-sectional view of the area "A" in FIG. 10.

FIG. 12 is an enlarged cross-sectional view of the area "B" in FIG. 10.

FIG. 13 is an exploded perspective view of a structure in which a heating plate is separated from a water tank of a coffee machine according to another embodiment of the present invention.

FIG. 14 is a cross-sectional view showing a structure in which a heating plate is inserted into a water tank of a coffee machine according to another embodiment of the present invention.

FIG. 15 is an exploded perspective view showing a structure in which a heating plate is separated from a water tank of a coffee machine according to another embodiment of the present invention.

FIG. 16 is a cross-sectional view showing a structure in which a heating plate is inserted into a water tank of a coffee machine according to another embodiment of the present invention.

FIG. 17 is a perspective view showing a structure of a heating plate of a coffee machine according to an embodiment of the present invention.

FIG. 18 is a perspective view showing a structure of a heating plate of a coffee machine according to an embodiment of the present invention.

FIG. 19 is a perspective view showing a structure of a heating plate of a coffee machine according to an embodiment of the present invention.

**[Mode for Invention]**

The above-described objectives, features and advantages are specifically described with reference to the attached drawings hereunder such that one having ordinary skill in the art to which the disclosure pertains may easily implement the technical spirit of the disclosure. In describing the disclosure, detailed description of known technologies in relation to the disclosure is omitted if it is deemed to make the gist of the disclosure unnecessarily vague. Below, preferred embodiments of the disclosure are specifically described with reference to the attached drawings. Throughout the drawings, identical reference numerals denote identical or similar components.

It will be understood that, although the terms first, second, and other terms may be used herein to describe various components, these components should not be limited by these terms. These terms are only used to distinguish one component from another, and a first component may be a second component unless stated to the contrary.

Throughout the disclosure, each component may be provided as a single one or a plurality of ones, unless explicitly stated to the contrary.

Hereinafter, when any component is arranged at "an upper portion (or a lower portion)" of the component or "on (or under")" of the component, any component can be arranged in contact with an upper surface (or a lower surface) of the component, and another component can be interposed between the component and any component arranged on (or under) the component.

Further, when one component is described as being "connected", "coupled", or "connected" to another component, the components can be directly connected or able to be connected to the other component; however, it is also to be understood that an additional component can be "interposed" between the two components, or the two components can be "connected", "coupled" or "connected" through an additional component.

As used herein, singular expressions include plural expressions, unless the context clearly indicates otherwise. It should be further understood that the terms "comprise" or "have" and the like, set forth herein, are not interpreted as necessarily including all the stated components or steps but may be interpreted as excluding some of the stated components or steps or may be interpreted as including additional components or steps.

In addition, as used herein, singular expressions include plural expressions, unless the context clearly indicates otherwise. It should be further understood that the terms "comprise" or "have" and the like, set forth herein, are not interpreted as necessarily including all the stated components or steps but may be interpreted as excluding some of the stated components or steps or may be interpreted as including additional components or steps.

Throughout the specification, unless otherwise stated, "A and/or B" means A, B or A and B. Unless otherwise stated, "C to D" means "C or more and D or less".

In the following description, coffee beans refer to roasted coffee beans, not the raw coffee beans harvested from the coffee tree.

In the following description, the size of ground coffee powder (or powder) may vary depending on preference and type of coffee bean. Ground coffee powder (or powder) does not mean coffee powder with a specific size, but coffee powder (or powder) with various sizes that can be changed depending on preference and type of coffee bean.

In the following description, a coffee machine refers to an apparatus that grinds coffee beans in a grinder, mixes the ground coffee powder with water, and dissolves the coffee ingredients in the water to extract liquid coffee.

In the following description, extracting coffee means supplying coffee powder to the dripper and then supplying water to bring the coffee powder and water into contact with each other to create liquid coffee containing coffee ingredients extracted from the coffee powder.

Hereinafter, the present invention will be described with reference to drawings showing the configuration of a coffee machine according to an embodiment of the present invention.

[Overall structure of a coffee machine]

Hereinafter, the overall structure of a coffee machine according to an embodiment of the present invention will be described in detail with reference to the attached drawings.

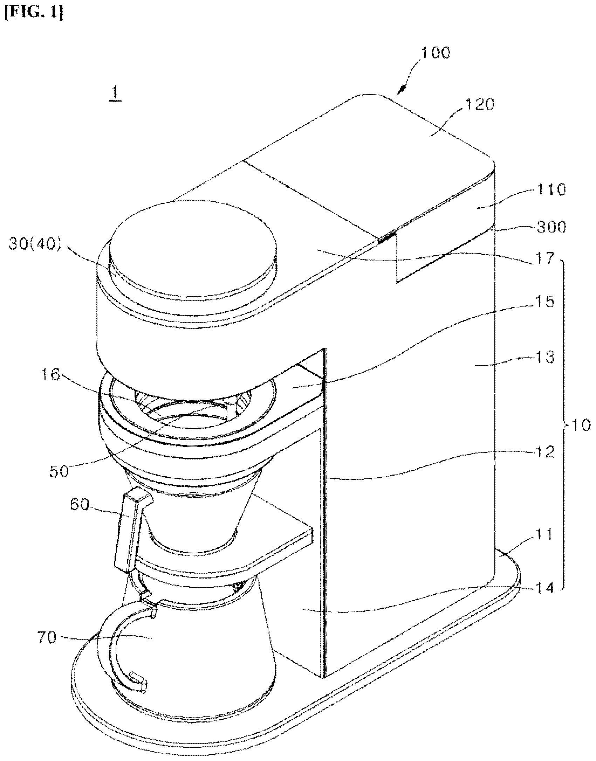

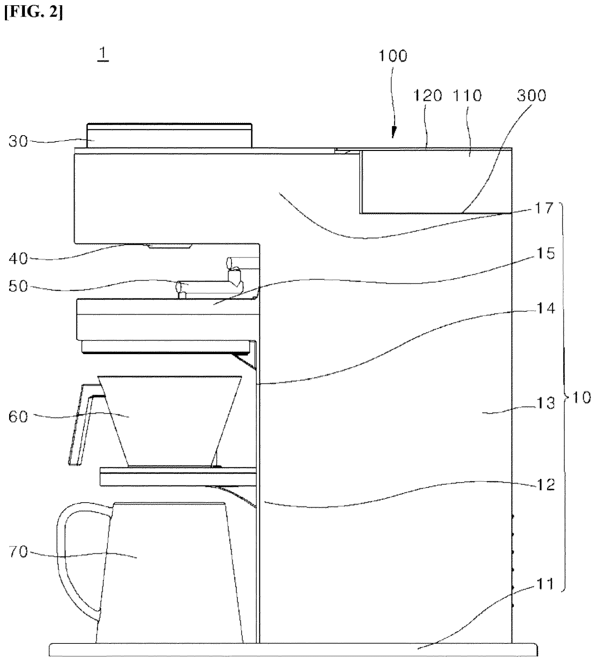

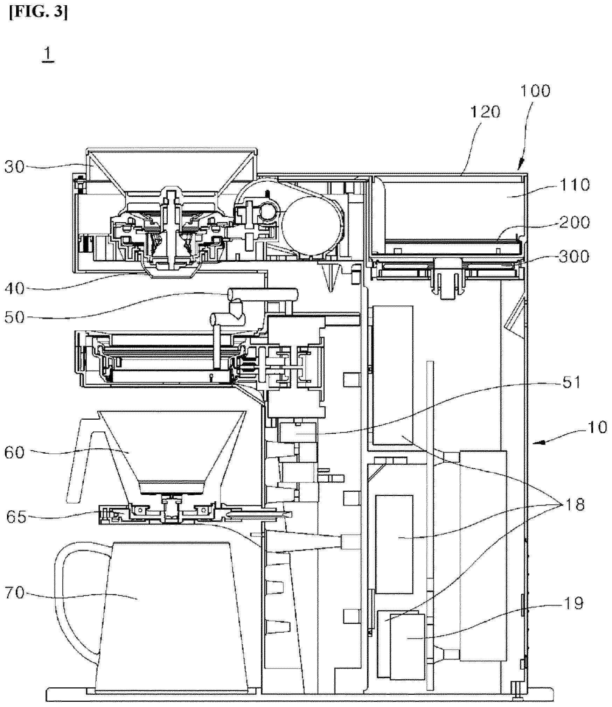

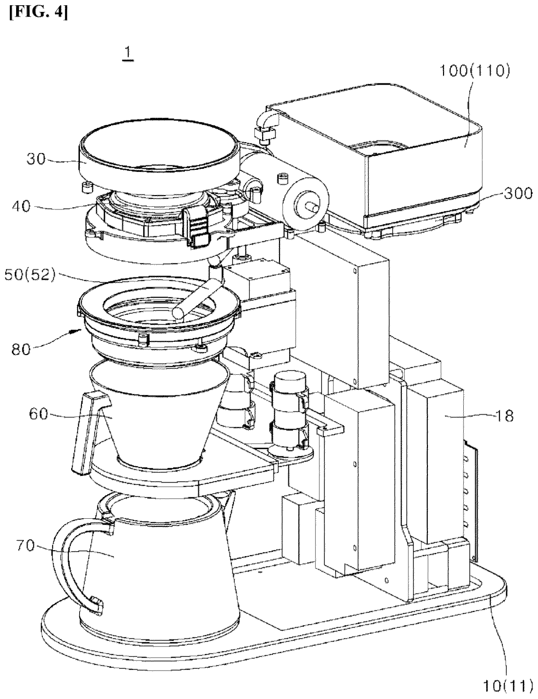

FIG. 1 is a perspective view of a coffee machine according to an embodiment of the present invention, FIG. 2 is a front view of a coffee machine according to an embodiment of the present invention, FIG. 3 is a schematic cross-sectional view of a coffee machine according to an embodiment of the present invention, and FIG. 4 is a diagram of the main parts of a coffee machine according to an embodiment of the present invention.

As shown, a coffee machine 1 according to the present invention includes a case 10, a water tank 100, a hopper 30, a grinder 40, a water outlet unit 50, a dripper 60, a coffee server 70, and a driving unit 80.

The case 10 corresponds to a main part of a coffee machine that connects and couples the water tank 100, hopper 30, grinder 40, water outlet unit 50, dripper 60, coffee server 70, and driving unit 80 with each other.

In addition, the case 10 serves to support each of the water tank 100, hopper 30, grinder 40, water outlet unit 50, dripper 60, coffee server 70, and driving unit 80 to be installed at a designated position.

The case 10 may be provided in a manner in which multiple case parts are assembled.

For example, the case 10 includes a base part 11, an inner case 12, an outer case 13, a first front part 14, a second front part 15, and an upper case 16.

The base part 11 is formed to have a plate shape to form the bottom of the case 10. The base part 11 provides a seating surface on which the coffee server 70 is seated.

The inner case 12 is a frame installed at a set height at the rear of a front space where the hopper 30, grinder 40, dripper 60, and coffee server 70 are disposed upward and downward.

The outer case 13 is a frame installed standing at the rear of the inner case 12. The outer case 13 is assembled with the inner case 13 from front and rear to form a box-shaped body.

A predetermined box-shaped space is provided between the inner case 12 and the outer case 13. Through this box-shaped space, various parts including multiple PCBs, PCB supporters supporting multiple PCBs, and blowing fans may be disposed.

The water tank 100 that is detachably coupled to the case 10 is located at the top of the outer case 13.

The first front part 14 is installed upright to be located in front of the inner case 12.

The second front part 15 is a frame that is coupled to protrude forward from the first front part 14.

A circular hole 16 is formed inside the plane of the second front part 15, and through this circular hole, the pipe of the water outlet unit makes a spiral motion and supplies water to the inside of the dripper.

The driving unit 80 that implements the spiral motion of the water outlet unit is located in the second front part 15.

The upper case 17 is coupled to the tops of the inner case 12 and first front part 14.

The hopper 30 may be located in the upper inner portion of the upper case 17, and the grinder 40 may be disposed in the lower inner portion of the upper case 17 at a position parallel to the hopper 30 upward and downward.

The water tank 20 refers to a water storage container that stores water to be supplied to the dripper 60 containing ground coffee powder when extracting coffee.

The water tank 100 may be located at the top of the outer case 13, and is provided with a structure that may be detachably coupled to and separated from the case 10.

In addition, the water tank 100 further includes a induction heating device 300 capable of heating the stored water to a set temperature.

A heating plate 200 heated in an induction heating manner by the induction heating device 300 may be inserted and disposed in the inner lower portion of the water tank 100.

The induction heating device 300 is coupled to the case 10. Specifically, the induction heating device 300 is disposed spaced apart from the lower portion of the water tank 100 within the case 10, and may be disposed to face the heating plate 200.

The water tank 100 includes a water tank body 110 that stores water, and a water tank cover 120 that is coupled to open and close the open top of the water tank body 110.

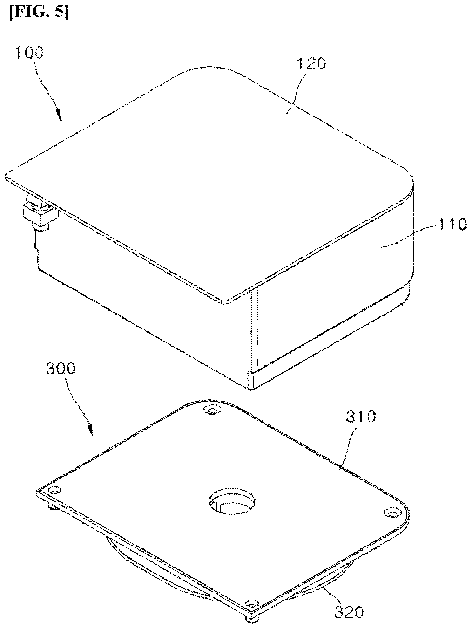

The water stored in the water tank 100 is heated to a predetermined temperature by the heating plate 200, which is heated according to the induction heating operation of the induction heating device 300, and the heated water is supplied to the water outlet unit 50 through a water tank discharge pipe 130 located on one side of the water tank body 110. The water heated in this way is supplied to the inside of the dripper 60 through the water outlet unit 50, and is mixed with coffee powder to extract liquid coffee. The water tank 100, heating plate 200, and induction heating device 300 will be described in detail later with reference to the attached FIGS. 5 to 19.

The hopper 30 is a device that supplies coffee beans to the grinder.

The hopper 30 is a container that may store a set amount of coffee beans, and may supply coffee beans for coffee extraction to the grinder 40 in a set amount.

The grinder 40 refers to a device that grinds coffee beans.

The grinder 40 receives roasted coffee beans introduced through the hopper 30 and grinds the coffee beans into powder of a set size or less. For example, the grinding degree of coffee powder ground in a grinder may be appropriately adjusted. Generally, the grinding degree may vary depending on the type of coffee bean, and the degree of coffee extraction may also vary accordingly, so it may set an appropriate grinding degree depending on the user's preference and/or the type of coffee bean.

The grinder 40 may be located at the upper portion of the dripper. Also, the coffee powder ground in the grinder 40 is supplied by falling toward the dripper 60 located at the lower portion of the grinder 40.

In addition, the grinder 40 may be located at the upper portion of the water outlet unit 50.

The water outlet unit 50 may be located between the grinder 40 and the dripper 60.

The water outlet unit 50 refers to a device that uniformly supplies water from the water tank 20 to the coffee powder inside the dripper 60 to extract liquid coffee after the coffee powder ground in the grinder 40 falls and is supplied to the dripper 60.

The water outlet unit 50 is located at the upper portion of the dripper 60, and may supply water by dropping the water toward the dripper 60.

The water outlet unit 50 includes a pump 51 that is connected to the water tank 100 to move the water discharged from the water tank 100, and a pipe 52 connected to the pump 51.

In addition, the water outlet unit 50 may be connected to the driving unit 80 to enable implementation of a spiral motion. The water outlet 55 of the water outlet unit 50 may be connected to the driving unit 80.

The driving unit 80 changes the position of the water outlet 55 within the upper drip area of the dripper 60 (that is, an area where water falls toward the coffee powder contained in the dripper 60).

The dripper 60 is a device that receives coffee powder ground in the grinder 40 and extracts liquid coffee by mixing the water supplied after being heated to a predetermined temperature in the water tank 100 with the coffee powder.

A filter may be installed inside the dripper 60. The filter extracts only the liquid coffee component from the coffee powder mixed with water, and a disposable or multi-use filter may be used.

The dripper 60 stably supports the filter and may have a shape that allows liquid coffee extracted through the filter to fall to the coffee server 70 below.

In addition, the dripper 60 allows the coffee powder ground in the grinder 40 to fall smoothly and be supplied to the inside of the dripper 60, and has a shape that allows the water supplied through the water outlet unit 50 to be well received into the inside of the dripper 60. For example, it is preferable for the upper portion (i.e., the inlet) of the dripper 60 to be shaped like a funnel with a larger cross-sectional area than that of the lower portion (i.e., the outlet).

In addition, the dripper 60 may be further equipped with an automatic flow control valve 65.

The automatic flow control valve 65 can open and close the lower part (i.e., outlet) of the dripper 60 or adjust the flow rate according to the drip recipe desired by the user. After the drip operation of liquid coffee is completed, the flow control valve 65 can be automatically closed to stop water extraction.

The coffee server 70 may be placed below the dripper 60. The coffee server 70 refers to a liquid coffee storage container that receives the liquid coffee extracted through the lower portion (i.e., outlet) of the dripper 60 and stores the liquid coffee so that the user can drink it.

The coffee server 70 may be coupled to the case 10, more specifically, the base part 11 in a detachable manner. The coffee server 70 may be separated from the base part 11 and carry out the coffee to the outside while containing the dripped liquid coffee.

[Structure of a water tank, heating plate, and induction heating device]

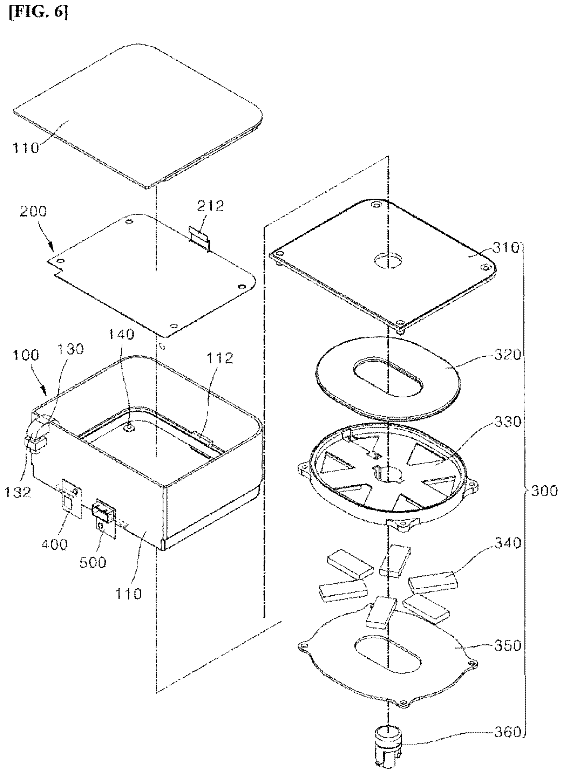

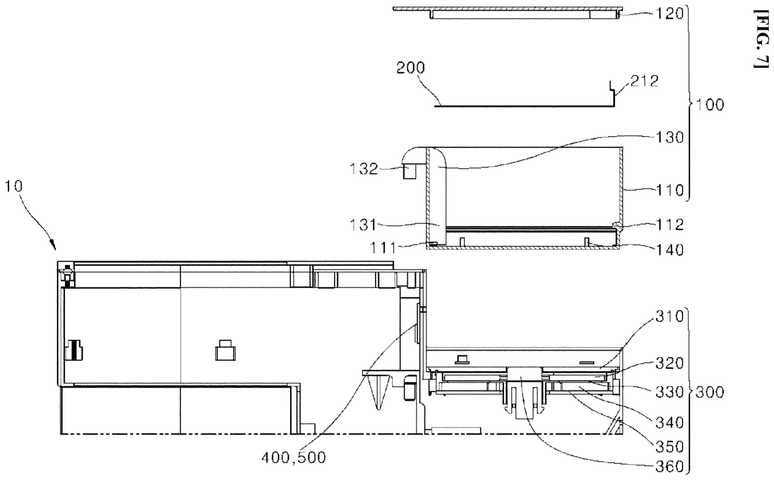

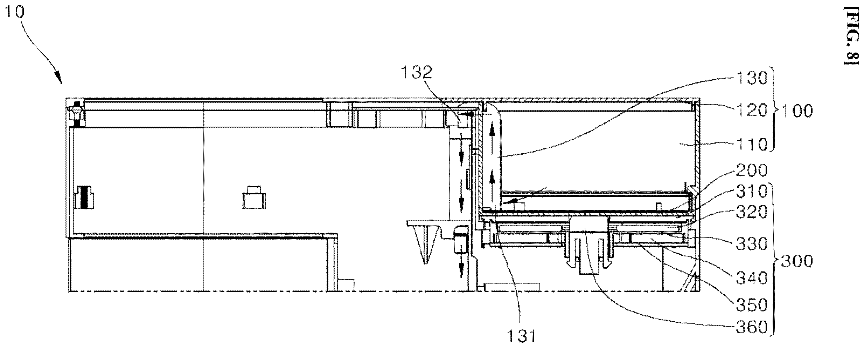

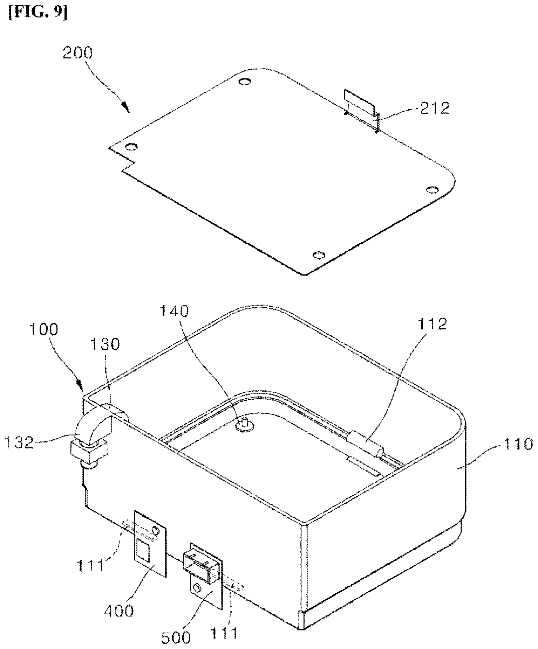

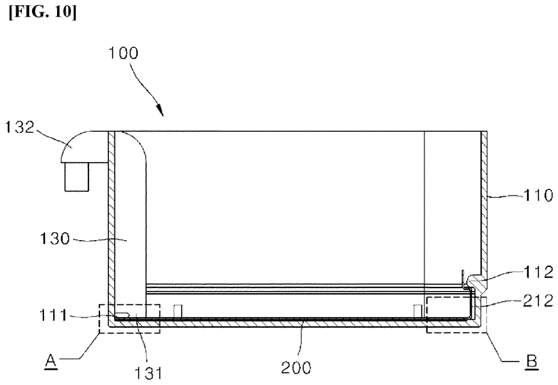

FIG. 5 is an enlarged perspective view of a water tank and induction heating device of a coffee machine, FIG. 6 is an enlarged exploded perspective view showing a water tank and induction heating device of a coffee machine, FIG. 7 is a cross-sectional view showing a structure before a water tank, heating plate, and induction heating device are coupled with a case, in a coffee machine, FIG. 8 is a cross-sectional view showing a structure after a water tank, heating plate, and induction heating device are coupled with a case in a coffee machine, FIG. 9 is an exploded perspective view of a structure in which a heating plate is separated from a water tank of a coffee machine, and FIG. 10 is a cross-sectional view showing a structure in which a heating plate is inserted into a water tank of a coffee machine.

The water tank 100 may be detachably coupled to the case 10.

At least one heating plate 200 for induction heating is provided inside the water tank 100.

The case 10 is provided with an induction heating device 300.

The induction heating device 300 may be built into a lower area where the water tank 100 is disposed within the case 10.

The induction heating device 300 is disposed to face the heating plate 200, and may heat the water stored in the water tank 100 to the required temperature by heating the heating plate 200 using an induction heating method.

In this way, the water tank 100 may be detachably coupled to or separated from the case 10. When the water tank 100 is coupled to the case 10, the induction heating device 300 and heating plate 200 may be disposed to face each other.

The water tank 100 includes a water tank body 110, a water tank cover 120, and a water tank discharge pipe 130.

The water tank body 110 is a box-shaped container with an open top, and is provided with a receiving space inside which a certain amount of water may be stored.

For example, the water tank body 110 may be a box-shaped container with a rectangular parallelepiped shape as shown, but it is not necessarily limited to this shape. The water tank body 110 may have various shapes other than a cylindrical or rectangular parallelepiped.

The water tank cover 120 is a cover that opens and closes the upper portion of the water tank body 110, and may be coupled to cover the upper portion of the water tank body 120.

The water tank discharge pipe 130 is provided on one side of the water tank body 110 and provides a water supply flow path for discharging the water stored in the water tank body 110 to the outside.

For example, referring to FIG. 10, the water tank discharge pipe 130 may be disposed vertically upward and downward along the inner wall of the water tank body 110 where the water tank body 110 and the case 10 are in contact.

The inlet 131 of the water tank discharge pipe 130 is located at the lower portion of the receiving space of the water tank body 110, that is, close to the bottom surface, and allows the water stored in the water tank body 110 to flow to the water tank discharge pipe 130.

The outlet 132 of the water tank discharge pipe 130 may be formed by extending from the upper portion of the water tank body 110 to the outside of the water tank body 110 in a curved shape. The water tank discharge pipe 130 may be connected to a water supply pipe (not shown) included in the water outlet unit 50.

As shown in FIG. 8, the water stored inside the water tank body 110 flows into the water tank discharge pipe 130 through the inlet 131 of the water tank discharge pipe 130, and is supplied to the outside of the water tank body 110 through the outlet 132 of the water tank discharge pipe 130. Since the outlet 132 of the water tank discharge pipe 130 is connected to the water outlet unit 50, the heated water can be stably supplied to the dripper 60 accordingly.

The water tank 100 may be made of a transparent plastic material that allows the amount of water stored inside to be visually identified.

The heating plate 200 refers to a metal plate provided inside the water tank 100, more specifically, the water tank body 110 and heated by induction heating.

For example, the heating plate 200 is preferably made of a metal material that is inductively heated by a magnetic field, such as stainless steel 430 or an iron plate.

The heating plate 200 may be located at the lower portion of the water tank 100.

The heating plate 200 preferably has a shape and area corresponding to the bottom surface of the water tank body 110. As the heating plate 200 has a shape and area (i.e., size) corresponding to the entire bottom surface of the water tank body 110, the water stored in the water tank body 110 may be heated quickly, increasing heating efficiency.

The heating plate 200 is inserted into the inner lower portion of the water tank 100. Specifically, the heating plate 200 may be inserted in a form parallel to the bottom surface of the water tank body 110.

In other words, the heating plate 200 may be detachably coupled to the inner lower portion of the water tank 100.

The heating plate 200 is a device that boils the water stored in the water tank 100, and the temperature of the heating plate 200 may rise by 100°C or higher.

In this case, a phenomenon such as water evaporation occurs on the surface of the heating plate 200, and mineral components dissolved in water are deposited on the surface of the heating plate 200, causing contamination such as the formation of white scale.

Accordingly, periodic cleaning of the water tank 100 and heating plate 200 is necessary. Therefore, not only does the water tank 100 have a structure that is detachable from the case 10, but the heating plate 200 also has a structure that is detachable from the water tank 100, thereby improving cleaning convenience.

In addition, the water tank 100 is made of transparent plastic material, so the user may directly check the degree of contamination of the water tank with the naked eye.

Meanwhile, referring to FIGS. 6 and 7, the case 10 may be provided with a non-contact temperature sensor 400 and a non-contact water level sensor 500.

The non-contact temperature sensor 400 may be installed in the case 10 to face one side of the water tank 100 and may measure the surface temperature of the water tank 100.

In other words, the non-contact temperature sensor 400 may be installed in the case 10 at a certain distance from the surface of the water tank 100, and may accurately measure the temperature of the water stored in the water tank 100 in a stable manner. As another embodiment, a contact-type temperature sensor that is installed to contact the surface of the water tank 100 and measures the surface temperature of the water tank 100 may be used.

The non-contact water level sensor 500 may be installed in the case 10 to face one side of the water tank 100 and may measure the level of water stored in the water tank 100.

The non-contact water level sensor 500 may easily measure the amount of water initially introduced and the amount of water stored after coffee extraction by measuring the level of water stored in the water tank 100.

For example, the non-contact water level sensor 500 may use a capacitive water level sensor. Such a non-contact water level sensor 500 may measure the water level in a non-contact manner by transmitting a signal in response to an object (i.e., water) having capacitance at a set distance.

Meanwhile, the induction heating device 300, which heats the heating plate 200 inserted inside the water tank 100 by induction heating, includes an induction heating case 310, an induction heating coil 320, a coil base 330, a ferrite 340, and a shield plate 350.

Referring to FIG. 6, the induction heating case 310 is disposed to face the lower portion of the water tank 100 and is a case part that embeds the induction heating coil 320.

The induction heating coil 320 is a coil member that is disposed to be built into the lower portion of the induction heating case 310. The induction heating coil 320 generates a magnetic field when external power is supplied and heats the heating plate 200 by induction heating, that is, induction heating (IH) method.

The coil base 330 is located at the lower portion of the induction heating case 310, and stably supports and accommodates the induction heating coil 320.

The ferrite 340 is located at the lower portion of the coil base 330, and the shield plate 350 is a plate made of aluminum and located at the lower portion of the ferrite 340. The ferrite 340 and shield plate 350 serve to shield the magnetic field from being transmitted in the opposite direction of the heating plate 200.

The induction heating coil 320, ferrite 340, and shield plate 350 are disposed upward and downward, are mounted on the coil base 330, and are restrained and disposed at the lower portion of the induction heating case 310.

The induction heating device 300 further includes a temperature sensor 360.

Referring to FIG. 6, the temperature sensor 360 penetrates the center of the induction heating device 300 and is exposed upward from the center of the induction heating case 310.

According to this structure, the temperature sensor 360 may detect the temperature of the water tank 100 spaced apart from the upper portion of the induction heating case 310. The temperature sensor 360 may block the operation of the induction heating device 300 when the temperature of the water tank 100 is overheated above a reference temperature.

Referring to FIG. 10, the water tank 100 of the coffee machine includes the water tank body 110 in which water is stored, and the water tank discharge pipe 130 is located on one side of the water tank body 110. Also, the heating plate 200 is inserted into the inner lower portion of the water tank body 110.

For example, an insertion groove 111 into which one end of the heating plate 200 is inserted may be provided on one lower side of the water tank body 110.

In addition, the other lower side of the water tank body 110 may be provided with a locking protrusion 112 on which a hook-shaped portion 212 formed on the other end of the heating plate 200 is locked and fixed.

According to this structure, the heating plate 200 may be inserted so as to be parallel to the bottom surface of the water tank 100 (i.e., the water tank body 110).

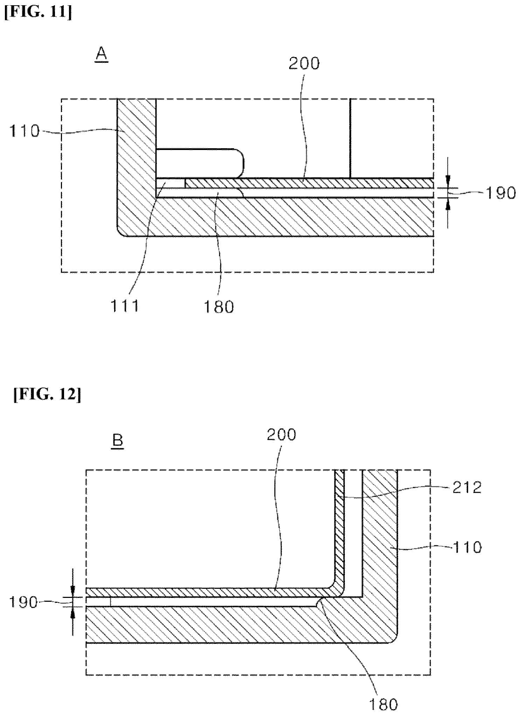

Also, at least one step portion 180 (see FIGS. 11 and 12) may be provided on the lower side of the insertion groove 111.

When the heating plate 200 is inserted into the inner lower portion of the water tank body 110, the step portion forms a gap (hereinafter referred to as the gap portion 190) of a certain height between the bottom surface of the water tank body 110 and the lower surface of the heating plate 200.

FIGS. 11 and 12 are enlarged cross-sectional views of areas "A" and "B" in FIG. 10.

Referring to FIGS. 11 and 12, it can be seen that the step portion 180 supports at least a portion of the heating plate 200 to form the predetermined gap portion 190 between the bottom surface of the water tank body 110 and the lower surface of the heating plate 200.

In this way, the step portion 180 may have a protruding shape to have a height corresponding to the gap portion 190 at the lower portion of the water tank 100, more specifically, at the inner lower portion of the water tank body 100.

In this case, when the heating plate 200 is inserted into the water tank 100, the heating plate 200 is seated on the step portion 180 to form the gap portion 190 between the bottom surface of the water tank 100 and the lower surface of the heating plate 200.

In addition, according to an embodiment of the present invention, a protrusion may be formed on the heating plate 200 rather than on the water tank 100 to form the gap portion 190.

Although not separately shown, when at least one protrusion having a height corresponding to the gap portion 190 is formed in the lower portion of the heating plate 200, the protrusion of the heating plate 200 may be seated on the bottom surface of the water tank 100. As a result, the predetermined gap portion 190 may be formed between the bottom surface of the water tank 100 and the lower surface of the heating plate 200.

In this way, the gap portion 190 is a gap that maintains a certain distance between the water tank 100 and the heating plate 200 to prevent them from contacting each other for smooth heat transfer.

The convective heat transfer equation follows Equation 1 below.

[Equation 1]

$$Q = h * A * \Delta T$$

In this case, Q is a heat transfer amount (Watt) or heating power, h is a convective heat transfer coefficient (W / $m^2$°C), A is a heat transfer area ($m^2$), and $\Delta T$ is a temperature difference ($\Delta$°C) or a difference between the temperature of the heating plate and water temperature.

According to the convection heat transfer equation, when the heat transfer amount Q is constant, if the heat transfer area A decreases, the convection heat transfer coefficient h and temperature difference $\Delta T$ increase.

Therefore, when the water tank 100 and heating plate 200 are in contact with each other, the water is heated only on one side of the heating plate 200, so the convective heat transfer coefficient h increases and the temperature of the heating plate 200 increases. For this reason, the generation of steam on the surface of the heating plate 200 increases, the water boils violently, and a loud noise of boiling water is generated.

In addition, the heating plate 200 has a metal material heated by a magnetic field, and the water tank 100 may be made of a transparent plastic material. When the temperature of the heating plate 200 increases, thermal deformation may occur in the water tank 100 that is in contact with the heating plate 200.

Therefore, the water tank 100 and heating plate 200 are preferably disposed parallel to each other with the predetermined gap portion 190 in between so that they do not come into contact with each other.

Due to the gap portion 190, both sides of the heating plate 200 are heated without contacting the water tank 100, thereby increasing the temperature of the water. As a result, heat transfer is easy and the temperature of the heating plate 200 does not increase excessively, so the noise of boiling water is reduced and thermal deformation of the water tank 100 can be prevented.

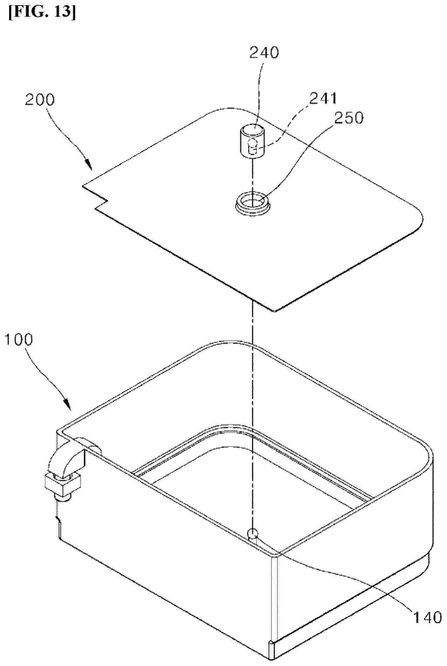

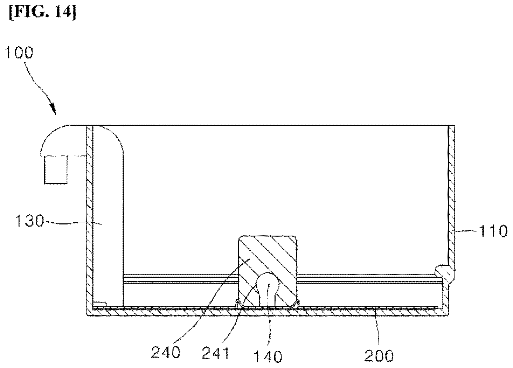

FIG. 13 is an exploded perspective view of a structure in which the heating plate is separated from the water tank of a coffee machine according to another embodiment of the present invention, and FIG. 14 is a cross-sectional view showing a structure in which the heating plate is inserted into the water tank of a coffee machine according to another embodiment of the present invention.

Referring to FIGS. 13 and 14, a fastening protrusion 140 that protrudes upward at a predetermined height may be provided at the lower center of the water tank body 110. Corresponding to the fastening protrusion 140 of the water tank body 110, the heating plate 200 includes a fastening hole 250 and an insertion member 240.

The fastening hole 250 refers to a hole of a predetermined size provided in the center of the surface of the heating plate 200 corresponding to the position of the fastening protrusion 140.

The insertion member 240 is made of an elastic material and may be coupled to the heating plate 200 through the fastening hole 250. A fastening groove 241 may be provided at the inner center of the insertion member 240.

When inserting the heating plate 200 into the inner lower portion of the water tank body 110, as shown in FIG. 14, the fastening protrusion 140 may be inserted and fitted into the fastening groove 241 of the insertion member 240 and coupled thereto.

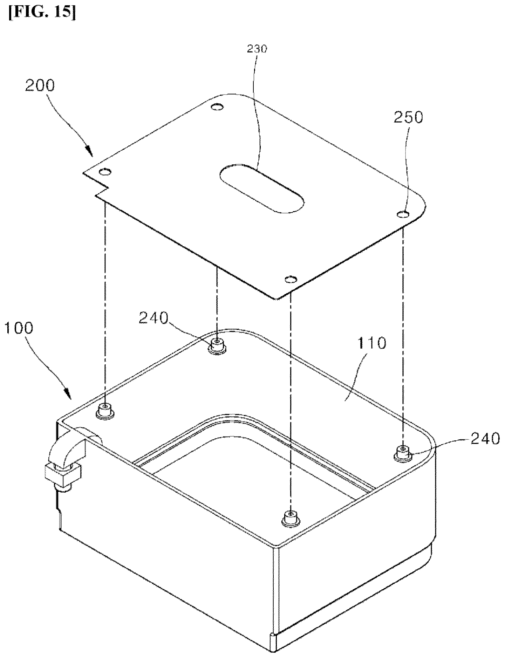

FIG. 15 is an exploded perspective view showing a structure in which the heating plate is separated from the water tank of a coffee machine according to another embodiment of the present invention, and FIG.

16 is a cross-sectional view showing a structure in which the heating plate is inserted into the water tank of a coffee machine according to another embodiment of the present invention.

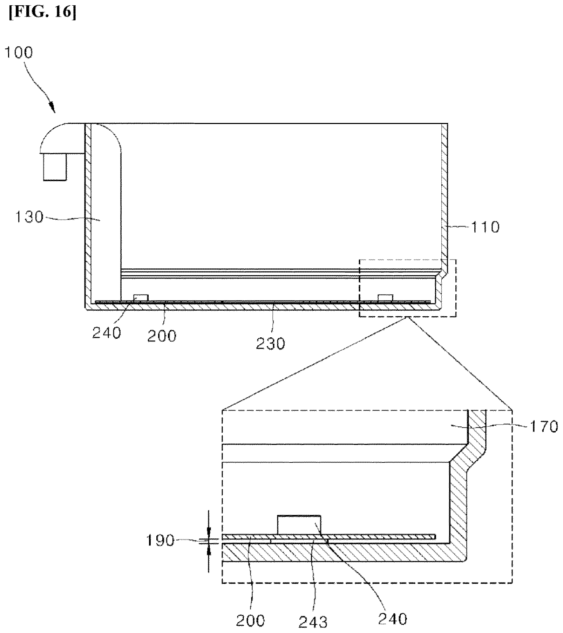

Referring to FIGS. 15 and 16, when the heating plate 200 is inserted into the inner lower portion of the water tank body 110, a plurality of fastening holes 250, a plurality of insertion members 240 are respectively inserted into the plurality of fastening hole 250, each provided at each edge of the heating plate 200 to fix the position of the heating plate 200.

A step portion 243 with an expanded diameter is provided at the lower end of each of the plurality of insertion members 240. The step portion 243 of the insertion member 240 forms the gap portion 190 of a predetermined height between the bottom surface of the water tank 100 and the heating plate 200 when the heating plate 200 is inserted into the water tank body 110.

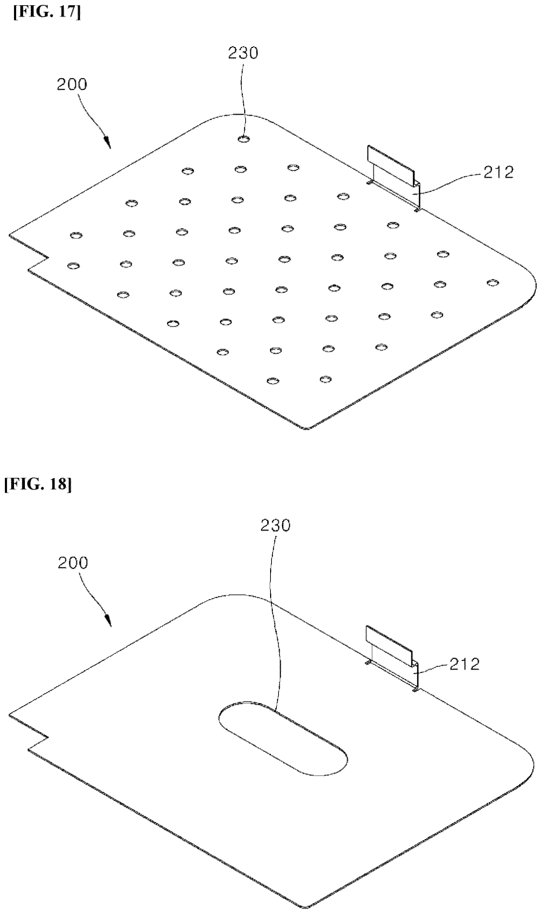

FIG. 17 is a perspective view showing a structure of the heating plate of a coffee machine according to an embodiment of the present invention, and FIG. 18 is a perspective view showing a structure of the heating plate of a coffee machine according to an embodiment of the present invention.

The heating plate 200 has at least one steam vent 230 formed through a thickness direction.

The heating plate 200 is disposed parallel to the inner lower portion of the water tank 100 with the gap portion 190 so as not to contact the water tank 100.

The heating plate 200 is heated on both sides, that is, the upper and lower surfaces, to boil water. The steam generated by boiling the water heated by the lower surface of the heating plate 200 may be blocked by the heating plate 200 and cannot escape upward, causing loud noise.

Therefore, the heating plate 200 is provided with the steam vent 230 penetrating in the thickness direction, allowing the steam generated at the lower portion of the heating plate 200 to be discharged well.

Referring to FIG. 17, a plurality of steam vents 230 may be provided. Each of the plurality of steam vents 230 may have a small hole shape disposed at equal intervals on the surface of the heating plate 200.

Referring to FIG. 18, unlike in FIG. 17, the steam vent 230 has a single round hole shape at the center of the surface of the heating plate 200 and is larger in size than the steam vent 230 in FIG. 17.

In this way, the steam vent 230 may have a structure in which small holes are disposed at regular intervals relative to the area of the heating plate 200. In another embodiment, the steam vent 230 may be provided in the form of a relatively large hole in the center of the heating plate 200.

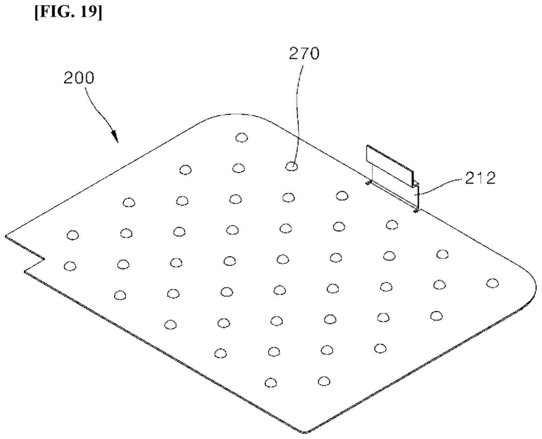

FIG. 19 is a perspective view showing a structure of the heating plate of a coffee machine according to an embodiment of the present invention.

Referring to FIG. 19, the upper surface of the heating plate 200 is further provided with an embossed portion 270 that protrudes convexly upward.

In the heating plate 200, the embossing portion 270 increases the heat transfer area Q to facilitate heat transfer to water, and may reduce the convective heat transfer coefficient h and temperature difference ΔT.

Referring to FIG. 19, the embossing portion 270 is shown to have a shape that protrudes convexly upward through the upper surface of the heating plate 200, but as another example, the embossing portion may have a shape that protrudes convexly downward through the lower surface of the heating plate 200.

As described above, according to the configuration and operation of the present invention, the detachable water tank is applied to the coffee machine and the induction heating plate is inserted in the water tank, so the water in the water tank can be heated using the induction heating method. The water tank and induction heating plate inside the water tank can be separated, making it easy to clean the water tank and induction heating plate, and the induction heating plate can be easily replaced.

Further, by adopting a structure in which the induction heating plate is inserted into the inside of the detachable water tank, the water stored in the water tank can be heated as a whole using the induction heating method, and thus, the outlet water temperature can be maintained uniformly.

Furthermore, the internal contamination state of the water tank can be confirmed with the naked eye, so the internal state of the water tank and state of the induction heating plate can be checked at any time, and cleaning and replacement of parts are easy.

As described above, the present invention has been described with reference to the illustrative drawings, but the present invention is not limited to the embodiments and drawings disclosed herein, and various modifications may be made by those skilled in the art within the scope of the technical idea of the present invention. In addition, although the operational effects according to the configuration of the present invention were not explicitly described and explained while explaining the embodiments of the present invention, it is apparent that the predictable effects due to the configuration should also be recognized.

## Claims

1. A coffee machine comprising:

   a case;
   a water tank that is coupled to the case and stores water;
   a water outlet unit that supplies the water stored in the water tank; and
   a dripper that extracts liquid coffee by mixing the water supplied from the water outlet unit with coffee powder,

   wherein the water tank is detachably coupled to the case, and includes at least one heating plate for induction heating inside the water tank, and the case includes an induction heating device that is disposed to face the heating plate, and heats the heating plate.

2. The coffee machine of claim 1, wherein the heating plate is located at a lower inner portion of the water tank.

3. The coffee machine of claim 1, wherein the heating plate has a shape and area corresponding to a bottom surface of the water tank.

4. The coffee machine of claim 1, wherein the heating plate is inserted into an inner lower portion of the water tank so as to be parallel to a bottom surface of the water tank, and
   wherein when the heating plate is inserted, a predetermined gap portion is formed between the bottom surface of the water tank and the heating plate.

5. The coffee machine of claim 4, wherein at least one step portion having a height corresponding to the gap portion is formed on the inner lower portion of the water tank, and
   wherein when the heating plate is inserted, the heating plate is seated on the step portion so that the gap portion is maintained between the bottom surface of the water tank and a lower surface of the heating plate.

6. The coffee machine of claim 4, wherein at least one protrusion having a height corresponding to the gap portion is formed on a lower portion of the heating plate, and
   wherein when the heating plate is inserted, the protrusion is seated on the bottom surface of the water tank and the gap portion is maintained between the bottom surface of the water tank and a lower surface of the heating plate.

7. The coffee machine of claim 1, wherein the heating plate is inserted into an inner lower portion of the water tank so as to be parallel to a bottom surface of the water tank, and
   wherein the heating plate has at least one steam vent formed through a thickness direction.

8. The coffee machine of claim 7, wherein a plurality of the steam vents are provided, and each of the plurality of steam vents is disposed at equal intervals on a surface of the heating plate.

9. The coffee machine of claim 7, wherein the steam vent is disposed to have a predetermined size at a center of a surface of the heating plate.

10. The coffee machine of claim 1, wherein the heating plate is inserted into an inner the lower portion of the water tank so as to be parallel to a bottom surface of the water tank, and
wherein the heating plate includes an embossing portion provided on at least one of an upper and lower surfaces of the heating plate to increase a surface area of the heating plate.

11. The coffee machine of claim 1, wherein the water tank includes:

a water tank body that is open at a top and has a receiving space for storing the water therein; and
a water tank cover that is coupled to the water tank body to open and close an upper portion of the water tank body.

12. The coffee machine of claim 11, wherein the water tank further includes a water tank discharge pipe that is provided on one side of the water tank body and discharges the water stored in the water tank body to an outside,
wherein an inlet of the water tank discharge pipe is located on the bottom surface of the water tank body, and an outlet of the water tank discharge pipe is formed to extend outward from an upper portion of the water tank body.

13. The coffee machine of claim 11, wherein an insertion groove, into which one end of the heating plate is inserted, is provided on one lower side of the water tank body,

a locking jaw, on which a hook-shaped portion formed on the other end of the heating plate is locked and fixed, is provided on the other lower side of the water tank body.
wherein when the heating plate is inserted, at least one step portion is provided on a lower side of the insertion groove to form a predetermined gap portion between the bottom surface of the water tank and the heating plate.

14. The coffee machine of claim 11, wherein a fastening protrusion is provided at a lower center of the water tank body and protrudes upward at a predetermined height,
wherein the heating plate includes:

a fastening hole that is provided at a center of a surface corresponding to a position of the fastening protrusion; and
an insertion member made of elastic material that penetrates the fastening hole and is coupled to the heating plate, and is provided with a fastening groove along an inner center,

wherein the fastening protrusion is inserted and fixed into the fastening groove of the insertion member.

15. The coffee machine of claim 1, wherein the case is equipped with a non-contact temperature sensor that is located facing one side of the water tank when the water tank is coupled and measures a surface temperature of the water tank.

16. The coffee machine of claim 1, wherein the case is equipped with a non-contact water level sensor that is located opposite one side of the water tank when the water tank is coupled and measures a level of the water stored in the water tank.

17. The coffee machine of claim 1, wherein the induction heating device includes:

an induction heating case that is disposed to face a lower portion of the water tank;
an induction heating coil that is disposed at a lower portion of the induction heating case;
a coil base that accommodates and supports the induction heating coil;
a ferrite that is located at a lower portion of the coil base; and
a shield plate that is located at a lower portion of the ferrite and coupled with the induction heating case.

18. The coffee machine of claim 17, wherein the induction heating device further includes a temperature sensor that penetrates a center of the induction heating device and is exposed upward from a center of the induction heating case, and detects a temperature of the water tank.

19. A coffee machine comprising:

a case;
a water tank that is located at a rear top of the case and stores water;
a hopper that is located at a front top of the case and stores a coffee bean;
a grinder that is located at a lower portion of the hopper and grinds the coffee bean supplied from the hopper;
a dripper that is located at a lower portion of the grinder, receives coffee powder ground by the grinder and extracts liquid coffee;
a water outlet unit that includes a water outlet dropping the water into an inside of the dripper; and
a driving unit that changes a position of the water outlet within an upper drip area of the dripper,
wherein the water tank is detachably coupled to the case,

at least one heating plate for induction heating is inserted inside the water tank, and
the case is provided with an induction heating device that is disposed to face the heating plate, and heats the heating plate.

20. The coffee machine of claim 19, wherein the heating plate is inserted into an inner lower portion of the water tank so as to be parallel to a bottom surface of the water tank, and
wherein when the heating plate is inserted, a predetermined gap portion is formed between the bottom surface of the water tank and the heating plate.

[FIG. 1]

[FIG. 2]

[FIG. 3]

**[FIG. 4]**

[FIG. 5]

[FIG. 6]

[FIG. 7]

[FIG. 8]

[FIG. 9]

[FIG. 10]

[FIG. 11]

[FIG. 12]

[FIG. 13]

[FIG. 14]

[FIG. 15]

[FIG. 16]

[FIG. 17]

[FIG. 18]

[FIG. 19]

## INTERNATIONAL SEARCH REPORT

| International application No. |
|---|
| **PCT/KR2022/014437** |

| | |
|---|---|
| **A.** | **CLASSIFICATION OF SUBJECT MATTER** |
| | **A47J 31/06**(2006.01)i; **A47J 31/56**(2006.01)i; **A47J 31/44**(2006.01)i; **A47J 31/42**(2006.01)i; **H05B 6/06**(2006.01)i; **H05B 6/12**(2006.01)i |
| | According to International Patent Classification (IPC) or to both national classification and IPC |

| | |
|---|---|
| **B.** | **FIELDS SEARCHED** |
| | Minimum documentation searched (classification system followed by classification symbols) |
| | A47J 31/06(2006.01); A47J 27/21(2006.01); A47J 31/047(2006.01); A47J 31/057(2006.01); A47J 31/42(2006.01); A47J 31/44(2006.01); A47J 31/46(2006.01); B01D 35/04(2006.01); B01D 35/18(2006.01); C02F 1/28(2006.01) |
| | Documentation searched other than minimum documentation to the extent that such documents are included in the fields searched |
| | Korean utility models and applications for utility models: IPC as above<br>Japanese utility models and applications for utility models: IPC as above |
| | Electronic data base consulted during the international search (name of data base and, where practicable, search terms used) |
| | eKOMPASS (KIPO internal) & keywords: 케이스(case), 수조(water tank), 출수부(outlet), 드리퍼(dripper), 가열판(heating plate), 유도가열장치(induction heating device), 커피머신(coffee machine) |

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y<br><br>A | JP 05-184467 A (HITACHI HOME TEC LTD.) 27 July 1993 (1993-07-27)<br>See paragraphs [0006]-[0021] and figures 1-3. | 1-12,15-20<br><br>13-14 |
| Y | JP 09-192018 A (MATSUSHITA ELECTRIC IND., CO., LTD.) 29 July 1997 (1997-07-29)<br>See paragraphs [0006]-[0019] and figures 1 and 4. | 1-12,15-20 |
| DY | KR 10-2115187 B1 (LG ELECTRONICS INC.) 26 May 2020 (2020-05-26)<br>See figures 4-6. | 17-18 |
| Y | KR 10-2021-0137749 A (LG ELECTRONICS INC.) 18 November 2021 (2021-11-18)<br>See paragraph [0051] and figure 2. | 19-20 |
| A | JP 06-014700 Y2 (SHARP CORP.) 20 April 1994 (1994-04-20)<br>See claim 1 and figure 1. | 1-20 |

| | |
|---|---|
| ☐ Further documents are listed in the continuation of Box C. | ☑ See patent family annex. |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 January 2023** | **25 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/014437**

| Patent document cited in search report | | | Publication date (day/month/year) | Patent family member(s) | | | Publication date (day/month/year) |
|---|---|---|---|---|---|---|---|
| JP | 05-184467 | A | 27 July 1993 | JP | 3039887 | B2 | 08 May 2000 |
| JP | 09-192018 | A | 29 July 1997 | JP | 3503323 | B2 | 02 March 2004 |
| KR | 10-2115187 | B1 | 26 May 2020 | CN | 107445331 | A | 08 December 2017 |
| | | | | CN | 107445331 | B | 23 March 2021 |
| | | | | KR | 10-2018-0042197 | A | 25 April 2018 |
| | | | | KR | 10-2043952 | B1 | 02 December 2019 |
| | | | | KR | 10-2043953 | B1 | 02 December 2019 |
| | | | | KR | 10-2112722 | B1 | 19 May 2020 |
| | | | | KR | 10-2423368 | B1 | 21 July 2022 |
| | | | | US | 10883742 | B2 | 05 January 2021 |
| | | | | US | 2017-0321931 | A1 | 09 November 2017 |
| KR | 10-2021-0137749 | A | 18 November 2021 | EP | 3909478 | A1 | 17 November 2021 |
| | | | | US | 2021-0345814 | A1 | 11 November 2021 |
| JP | 06-014700 | Y2 | 20 April 1994 | JP | 02-075024 | U | 08 June 1990 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210171550
- US 4779520 A
- KR 102115187